# EUROPÄISCHE PATENTSCHRIFT

(11) **EP 1 868 842 B1**
(45) Veröffentlichungstag und Bekanntmachung des Hinweises auf die Patenterteilung: **05.11.2014**
(21) Anmeldenummer: 06725371.6
(22) Anmeldetag: 28.03.2006
(51) Int. Cl.: B60N 2/48, B29C 39/00

(54) **KOPFSTÜTZE FÜR EIN FAHRZEUG, VERFAHREN ZUR HERSTELLUNG EINER KOPFSTÜTZE UND FAHRZEUGSITZ**
HEADREST FOR A VEHICLE, METHOD FOR PRODUCING A HEADREST, AND VEHICLE SEAT
APPUIE-TETE POUR UN VEHICULE, SON PROCEDE DE PRODUCTION ET SIEGE DE VEHICULE

(30) Priorität: 01.04.2005 DE 102005015292
(43) Veröffentlichungstag der Anmeldung: 26.12.2007
(73) Patentinhaber: Johnson Controls GmbH, 51399 Burscheid (DE)
(72) Erfinder: MORILHAT, Philippe, F-67640 Fegersheim (FR); ZAEPFEL, Francois, F-67114 Eschau (FR); QUIRIN, Paul, F-67400 Illkirch (FR); GEISINGER, Eugenie, F-67320 Drulingen (FR); OLLAND, Yves, F-67460 Souffelweyersheim (FR); MEHL, Nicolas, F-67939 Kesseldorf (FR)
(74) Vertreter: Wolff, Felix
(86) Internationale Anmeldenummer: PCT/EP2006/061111
(87) Internationale Veröffentlichungsnummer: WO 2006/103242

(56) Entgegenhaltungen:
- DE-A1- 2 405 774
- DE-A1- 2 727 987
- ES-A1- 2 192 116
- US-A- 6 149 233
- US-A1- 2001 028 190
- PATENT ABSTRACTS OF JAPAN Bd. 1995, Nr. 05, 30. Juni 1995 (1995-06-30) -& JP 07 039660 A (INOAC CORP), 10. Februar 1995 (1995-02-10)

## Beschreibung

Die Erfindung betrifft eine Kopfstütze für ein Fahrzeug nach dem Oberbegriff des Anspruchs 1.

Solche Kopfstützen sind beispielsweise aus der US 6,149,233 A, der JP 07039660 A und der ES 2 192 116 A allgemein bekannt. Insbesondere ist es bei Kopfstützen für Fahrzeuge bereits bekannt, dass zwischen einem äußeren Bezug und einem inneren Verbindungsteil zur Anbindung der Kopfstütze an eine Kopfstützenhalterung, insbesondere in Form von Kopfstützenstangen, ein Füllmaterial in Form eines Schaums angeordnet ist, der zum einen der Kopfstütze die notwendige Stabilität verleiht und andererseits leicht formbar ist und ein geringes Gewicht aufweist.

Bei bekannten Kopfstützen ist es beispielsweise vorgesehen, dass ein vorgeformter Schaumkörper zur Füllung des Kopfstützenkörpers verwendet wird. Dies erfordert zum Zusammenbau und zur Formgebung der Kopfstütze bzw. einzelner Teile davon eine vergleichsweise große Anzahl von Herstellungs- und Verarbeitungsschritten, so dass ein solches Herstellungsverfahren für Kopfstützen sehr aufwendig und teuer ist.

Aus der DE 689 02 955 T2 ist ein Verfahren zur Herstellung von Sitzen bekannt, bei dem ein Schaumpolster durch ein "Am-Ort-Schäumungsverfahren" bzw. PIP-Verfahren (Pour-in-place-Verfahren) hergestellt wird. Vorteilhaft bei diesem Verfahren ist zum einen, dass die Herstellung des Schaumpolsters schneller durchführbar ist, und zum anderen, dass die Herstellung mit weniger Schritten und damit kostengünstiger durchführbar ist.

Bei einer direkten Anwendung des PIP-Verfahrens auf Kopfstützen kommt es jedoch aufgrund der spezifischen Gegebenheiten bei solchen Kopfstützen zu Problemen, insbesondere wenn der Kopfstützenkörper gegenüber der Kopfstützenhalterung beweglich vorgesehen sein soll, beispielsweise kippbeweglich.

Der Erfindung liegt daher die Aufgabe zugrunde, eine Kopfstütze für ein Fahrzeug anzugeben, die einfach, schnell und mit vergleichsweise geringem Aufwand herstellbar ist und die dennoch ein Höchstmaß an Ästhetik und Funktionalität aufweist und insbesondere die Nachteile des Standes der Technik vermeidet.

Die Aufgabe wird erfindungsgemäß durch eine Kopfstütze für ein Fahrzeug nach Anspruch 1, insbesondere für ein Kraftfahrzeug, gelöst. Es ist hierdurch möglich, die grundsätzlich bekannte Methode des PIP-Schäumens auch für Kopfstützen anzuwenden, wobei solche Kopfstützen genauso wie bei herkömmlicherweise auf eine kompliziertere Art hergestellten Kopfstützen eine Neigungseinstellbarkeit des Kopfstützenkörpers gegenüber der Kopfstützenhalterung aufweisen. Erfindungsgemäß wird dies durch eine ausreichende Dichtigkeit des Verbindungsteils gegenüber dem Inneren des die Kopfstützenhalterung aufnehmenden Verbindungsteils einerseits und eine ausreichende Dichtigkeit zwischen dem Bezug und dem Verbindungsteil andererseits bezüglich des Füllmaterials in seinem Verarbeitungszustand erreicht.

Im Sinne der Erfindung ist mit dem Begriff "Verarbeitungszustand" des Füllmaterials derjenige Zustand des Füllmaterials bezeichnet, in dem sich das Füllmaterial bei seiner Verwendung in dem Herstellungsprozess befindet. Der Verarbeitungszustand des Füllmaterials ist damit im Wesentlichen durch eine bestimmte Viskosität der das Füllmaterial in seinem Verarbeitungszustand darstellenden Flüssigkeit gekennzeichnet. Als weitere Parameter des Verarbeitungszustandes mit Blick auf die Dichtigkeit des Raumbereichs kommt die Aufschäumzeit bzw. die Härtungszeit des Füllmaterials in Frage.

Im Sinne der vorliegenden Erfindung wird unter dem Begriff "dichter Raumbereich" verstanden, dass das Füllmaterial in seinem Verarbeitungszustand, d. h. vor seinem ausgehärteten bzw. aufgeschäumten Endzustand, den es während der Lebensdauer der Kopfstütze aufweist, nicht in nennenswertem Umfang aus dem dichten Raumbereich austritt, insbesondere in das Innere des Verbindungsteils bzw. zwischen den Verbindungsteil und den Bezug.

Erfindungsgemäß ist der Bezug im Wesentlichen an der gesamten Außenseite des Kopfstützenkörpers angeordnet, insbesondere auch im Bereich des Austritts der Kopfstützenhalterung aus dem Kopfstützenkörper. Es ist hierdurch möglich, der gesamten Kopfstütze bzw. insbesondere dem Kopfstützenkörper ein besonders homogenes und damit ansprechendes Äußeres dadurch zu verleihen, dass der Kopfstützenkörper quasi rundherum, insbesondere auch in seinem unteren Bereich, wo sich der Austritt der Kopfstützenhalterung aus dem Kopfstützenkörper befindet, von dem Bezug umgeben ist. Weiterhin kann hierdurch die erfindungsgemäße Kopfstütze auch sicherer gestaltet werden, da beispielsweise ein zusätzliches Abdeckteil im Bereich des Austritts der Kopfstützenhalterung aus dem Kopfstützenkörper vermieden wird. Ein solches Abdeckteil kann sich beispielsweise in Crash-Situationen von der Kopfstütze lösen und damit Insassen des Fahrzeugs gefährden oder aber es kann ein solches Abdeckteil splittern und damit ebenfalls eine Gefährdung für Insassen des Fahrzeugs darstellen.

Es ist ferner bevorzugt, dass das Verbindungsteil zur Aufnahme der Kopfstützenhalterung ein Innenvolumen aufweist und dass bezüglich des Füllmaterials in seinem Verarbeitungszustand der mit dem Füllmaterial in Kontakt kommende Teil des Verbindungsteils gegenüber dem Innenvolumen abdichtend vorgesehen ist. Erfindungsgemäß verläuft der Bezug zumindest teilweise im Bereich eines im Bereich des Austritts der Kopfstützenhalterung befindlichen Randes des Verbindungsteils, wobei der Rand derart vorgesehen ist, dass der Bezug abdichtend an den Rand anlegbar ist. Hierdurch ist es insgesamt mit einfachen Mitteln möglich, sowohl eine einfache, schnelle und kostengünstige Herstellbarkeit der erfindungsgemäßen Kopfstütze sicherzustellen und andererseits keinerlei Abstriche hinsichtlich der optischen Gestaltung der Kopfstütze oder ihres Funktionswertes, etwa hinsichtlich ihrer Verstellmöglichkeiten zur komfortablen Positionierung, hinzunehmen.

Ein weiterer Gegenstand der vorliegenden Erfindung ist ein Verfahren nach Anspruch 3.

Der Endzustand ist im Sinne dieser Erfindung als derjenige Zustand des Füllmaterials definiert, den das Füllmaterial nach seiner Formgebung bzw. insbesondere nach seiner Schäumung, d. h. während der gesamten Lebensdauer der Kopfstütze, aufweist. Der Endzustand des Füllmaterials ist im Wesentlichen dadurch gekennzeichnet, dass der Schaum vollständig polymerisiert ist.

Der Vorteil des erfindungsgemäßen Verfahrens ist, dass es besonders einfach, schnell und kostengünstig durchführbar ist, so dass auch die hierdurch hergestellte Kopfstütze, insbesondere sehr kostengünstig und sehr schnell herstellbar ist.

Erfindungsgemäß ist vorgesehen, dass, zumindest während das in die Kopfstütze eingebrachte Füllmaterial in seinem Verarbeitungszustand vorliegt, mittels eines Werkzeugs der Bezug gegen den Rand des Verbindungsteils gedrückt wird. Hierdurch ist es mit einfachen Mitteln möglich, eine Abdichtung desjenigen Raumbereichs herzustellen, der mit dem Füllmaterial befüllt werden soll, und dennoch die Kopfstütze vollständig mit dem Bezug zu umhüllen.

Ein weiterer Gegenstand der vorliegenden Erfindung ist ein Fahrzeugsitz mit einer erfindungsgemäßen Kopfstütze, bei dem die Kopfstütze gegenüber dem Sitz im Wesentlichen entlang einer Haupterstreckungsrichtung der Kopfstützenhalterung verstellbar vorgesehen ist. Hierdurch ist es möglich, dass die Kopfstütze gemäß vier Einstellrichtungen einstellbar ist, nämlich sowohl nach oben und nach unten entlang der Haupterstreckungsrichtung der Kopfstützenhalterung als auch nach vorne bzw. nach hinten kippbar. Eine solche vierfach verstellbare Kopfstütze kommt in besonderer Weise den Komfortansprüchen von Benutzern heutiger Kraftfahrzeuge entgegen.

Die Erfindung wird nachfolgend anhand von in der Zeichnung dargestellten Ausführungsbeispielen näher erläutert.
- **Figur 1**: zeigt eine Prinzipdarstellung einer erfindungsgemäßen Kopfstütze, bei der der Kopfstützenkörper gegenüber einer Kopfstützenhalterung kippbeweglich vorgesehen ist,
- **Figur 2**: zeigt eine erste Ausführungsform des Unterteils einer erfindungsgemäßen Kopfstütze,
- **Figur 3**: zeigt eine teilweise aufgeschnittene Darstellung des Kopfstützenkörpers der ersten Ausführungsform,
- **Figuren 4a-4c**: zeigen die wesentlichen Elemente der Kopfstütze im Inneren des Kopfstützenkörpers bei der ersten Ausführungsform der erfindungsgemäßen Kopfstütze,
- **Figur 5**: zeigt eine Außenansicht der fertigen Kopfstütze bei der ersten Ausführungsform der erfindungsgemäßen Kopfstütze und
- **Figur 6**: zeigt das Unterteil des Kopfstützenkörpers einer zweiten Ausführungsform der erfindungsgemäßen Kopfstütze.

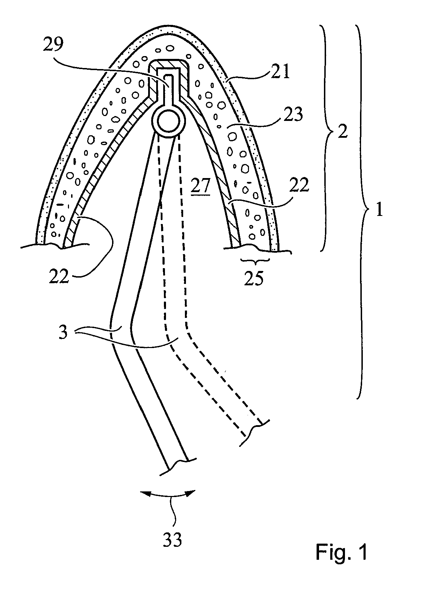

In Figur 1 ist eine Kopfstütze 1 mit einem Kopfstützenkörper 2 und einer Kopfstützenhalterung 3 dargestellt. Der Kopfstützenkörper 2 und die Kopfstützenhalterung 3 sind erfindungsgemäß beweglich, insbesondere kippbeweglich, miteinander verbunden, was in **Figur 1** durch den Doppelpfeil 33 angedeutet ist. Der Kopfstützenkörper 2 umfasst bei einer erfindungsgemäßen Kopfstütze 1, insbesondere einen Bezug 21, ein Verbindungsteil 22 sowie ein Füllmaterial 23, welches insbesondere als ein Schaummaterial vorgesehen ist bzw. sich in seinem Endzustand als ein Schaummaterial darstellt. In einem Verarbeitungszustand des Füllmaterials 23 ist dieses im Wesentlichen flüssig vorgesehen und wird in einen Raumbereich 25 zwischen dem Bezug 21 und dem Verbindungsteil 22 eingefüllt. Hierbei ist erfindungsgemäß der Raumbereich 25 sowohl gegen ein Austreten des Füllmaterials 23 in seinem Verarbeitungszustand in das Innenvolumen 27 des Verbindungsteils 22 als auch zwischen dem Bezug 21 und dem Verbindungsteil 22 dicht vorgesehen. Eine Feder 29 bzw. Klammer 29 dient der mechanischen Verbindung und der Realisierung der Kippbeweglichkeit zwischen der Kopfstützenhalterung 3 und dem Kopfstützenkörper 2, insbesondere dem Verbindungsteil 22.

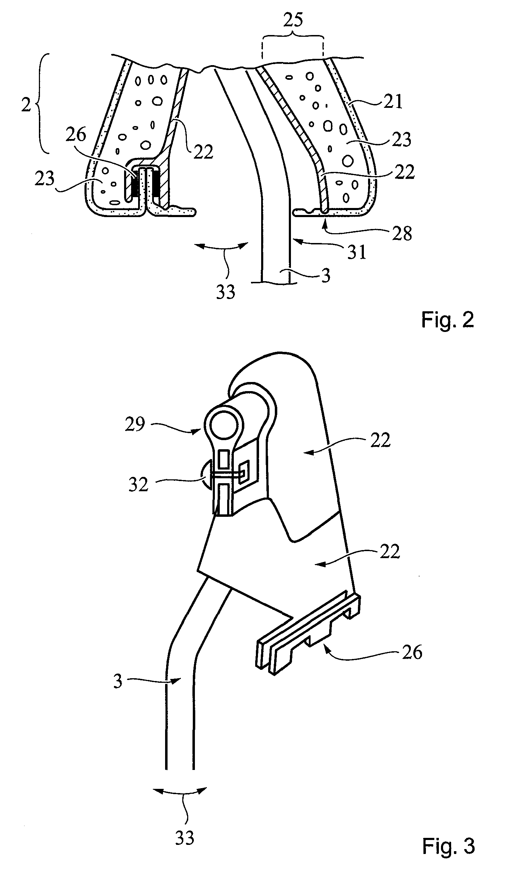

**Figur 2** stellt den unteren Teil einer ersten Ausführungsform des Kopfstützenkörpers 2 dar. Wiederum ist der Raumbereich 25 zwischen dem Bezug 21 und dem Verbindungsteil 22 mit dem Füllmaterial 23 aufgefüllt, wobei auch in **Figur 2** die Kopfstützenhalterung 3 sowie ihre Kippbeweglichkeit (Doppelpfeil 33) angedeutet ist. Das Verbindungsteil 22 weist im linken Teil der **Figur 2** sichtbar ein Befestigungsmittel 26 für den Bezug 21 auf. Im rechten Teil der **Figur 2** ist der Bezug 21 an ein spezielles Profil des Verbindungsteils 22, insbesondere an einen Rand 28 des Verbindungsteils 22, lediglich derart angelegt bzw. während des Herstellungsprozesses mittels eines nicht dargestellten Werkzeuges angedrückt, dass im Bereich des Randes 28 das Füllmaterial 23 in seinem Verarbeitungszustand nicht oder zumindest nicht in nennenswertem Umfang austreten kann. Der Raumbereich 25 ist daher auch an dieser Stelle dicht. Der Rand 28 ist derart ausgeführt, dass er eine vergleichsweise kleine Auflagefläche zum Bezug 21 hin aufweist, so dass bereits eine geringe Kraft eines in den Figuren nicht dargestellten Werkzeuges bei der Herstellung der erfindungsgemäßen Kopfstütze ausreicht, um an der Stelle des Randes 28 zum Bezug 21 ein gegenüber dem Füllmaterial 23 in seinem Verarbeitungszustand abgedichtetes Verhalten aufzuweisen.

In **Figur 3** ist die erste Ausführungsform des erfindungsgemäßen Kopfstützenkörpers 2 in teilweise aufgeschnittener Form dargestellt, d. h. ohne den Bezug 21. Sichtbar ist hierbei das Verbindungsteil 22, das Befestigungsmittel 26 sowie die Klammer 29 bzw. die Feder 29. Weiterhin ist ein Befestigungselement 32, insbesondere in Form einer Schraube, zur Befestigung des Verbindungsteils 22 mit der Klammer 29 bzw. der Feder 29 dargestellt.

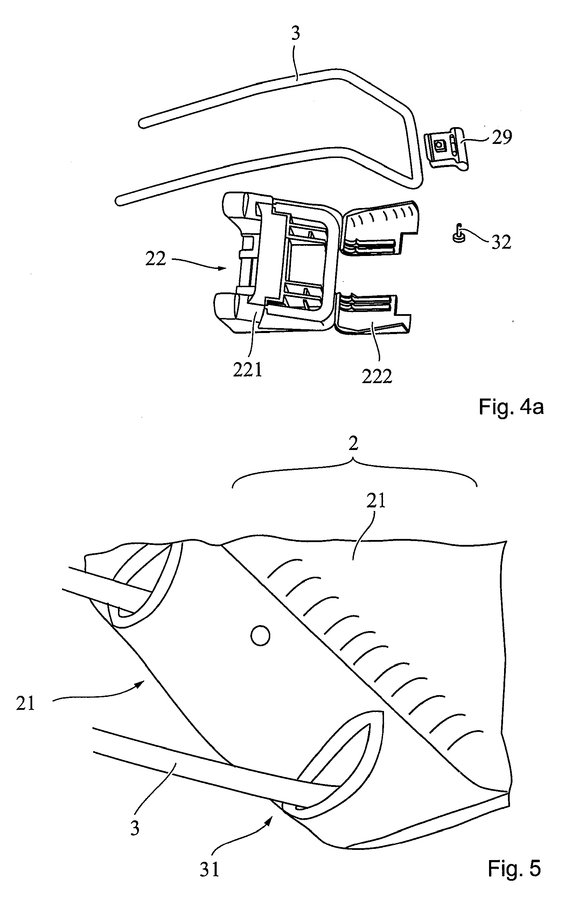

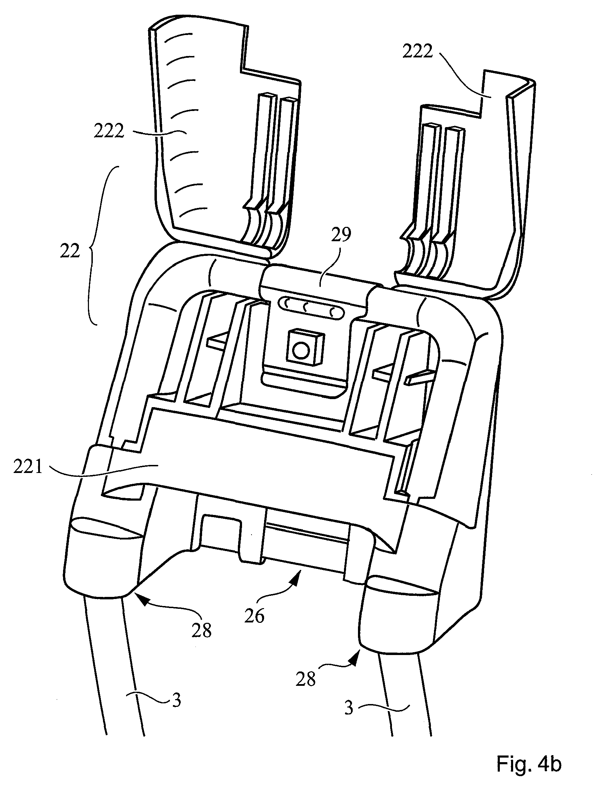

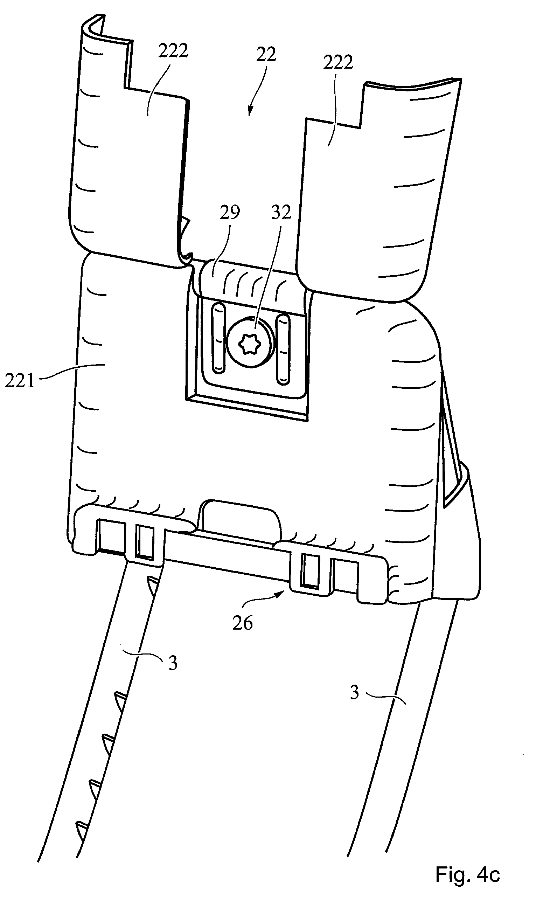

In den **Figuren 4a****-c** sind die wesentlichen Einzelteile im Inneren des Bezugs 21 der Kopfstütze 1 dargestellt. **Figur 4a** zeigt die Kopfstützenhalterung 3, welche teilweise auch aus dem Kopfstützenkörper 2 herausragt (vgl. Figuren 1 bis 3), das Verbindungsteil 22, die Feder 29 bzw. Klammer 29 sowie das Befestigungselement 32 in auseinandergebautem Zustand. **Figuren 4b** **und** **4c** zeigen die Kopfstützenhalterung 3, das Verbindungsteil 22, die Feder 29 bzw. Klammer 29 sowie das Befestigungselement 32 in zusammengebautem Zustand. Das Verbindungsteil 22 ist in den **Figuren 4a****-c** in aufgeklappter Form dargestellt, nämlich mit einem Hauptteil 221 und einem auf das Hauptteil 221 klappbaren Hilfsteil 222. Zur Fertigung der Kopfstütze 1 wird erfindungsgemäß die Kopfstützenhalterung 3 in das Verbindungsteil 22 eingeschoben und anschließend das Hilfsteil 222 auf das Hauptteil 221 heruntergeklappt. Hierbei ist das Verbindungsteil 22 derart gestaltet, dass bei geschlossenem (heruntergeklappten) Hilfsteil 222 eine gegenüber dem in **Figur 4a-4c** nicht dargestellten Innenvolumen 27 des Verbindungsteils 22 abgedichtete Form mit Bezug auf das Füllmaterial 23 in seinem Verarbeitungszustand herstellbar ist. Hierdurch ist es erfindungsgemäß so, dass bei dem Herstellungsverfahren der erfindungsgemäßen Kopfstütze 1 (PIP-Verfahren) das Füllmaterial 23 nicht oder zumindest nicht in nennenswertem Umfang in das Innenvolumen 27 des Verbindungsteils 22 eintreten kann, was zu einer Verhinderung der Kippbeweglichkeit der Kopfstützenhalterung 3 gegenüber dem Verbindungsteil 22 und damit gegenüber dem Kopfstützenkörper 2 führen könnte.

In **Figur 5** ist der Kopfstützenkörper 2 und die Kopfstützenhalterung 3 in ihrer fertiggestellten Form dargestellt, wobei an dem Austritt 31 der Kopfstützenhalterung 3 aus dem Kopfstützenkörper 2 der Bezug 21 erkennbar ist. Hierdurch bekommt die erfindungsgemäße Kopfstütze 1 ein besonders gefälliges Äußeres.

Erfindungsgemäß ist in bekannter Weise mit dem Begriff "Bezug 21" auch eine Kaschierung bzw. ein auf der Innenseite des Bezugs 21 angebrachtes Laminat vorgesehen, damit das Füllmaterial 23 nicht das Gewebe des Bezugs 21 durchdringt. Als Füllmaterial 23 wird erfindungsgemäß insbesondere in Polyurethanschaum vorgesehen, wobei jedoch andere Materialien ebenso geeignet sind, insbesondere solche, die beim PIP-Verfahren üblicherweise eingesetzt werden. Hierzu wird auf die Druckschrift DE 689 02 955 T2 verwiesen und diese als Referenz eingeführt.

Bei einer solchen erfindungsgemäßen Kopfstütze 1 werden die Anforderungen der Norm ECE 17 und FMVSS 202 erfüllt.

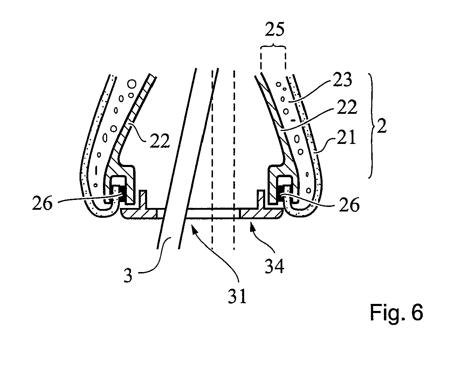

In **Figur 6** ist der untere Teil eines Kopfstützenkörpers 2 gemäß einer zweiten Ausführungsform der Kopfstütze 1 dargestellt, wobei im Bereich des Austritts 31 der Kopfstützenhalterung 3 ein Abdeckelement 34, insbesondere aus Plastikmaterial bzw. Kunststoffmaterial, vorgesehen ist und wobei auf beiden Seiten des Verbindungsteils 22 ein Befestigungsmittel 26 zur Fixierung des Bezugs 21 vorgesehen ist.

Der Bezug 21 ist mit dem Verbindungsteil 22 verbunden und zwar mittels des Befestigungsmittels 26 entlang des gesamten unteren Umfangs des Verbindungsteils 22, wobei das Verbindungsteil 22 eine im Wesentlichen glockenförmige Form aufweist.

### Bezugszeichenliste

- 1: Kopfstütze
- 2: Kopfstützenkörper
- 3: Kopfstützenhalterung
- 21: Bezug
- 22: Verbindungsteil
- 23: Füllmaterial
- 25: Raumbereich
- 26: Befestigungsmittel
- 27: Innenvolumen
- 28: Rand
- 29: Feder bzw. Klammer
- 31: Austritt der Kopfstützenhalterung
- 32: Befestigungselement
- 33: Doppelpfeil
- 34: Abdeckelement
- 221: Hauptteil
- 222: Hilfsteil

## Patentansprüche

1. Kopfstütze (1) für ein Fahrzeug, insbesondere Kraftfahrzeug, mit einem Kopfstützenkörper (2) und einer Kopfstützenhalterung (3), wobei an der Außenseite des Kopfstützenkörpers (2) zumindest teilweise ein Bezug (21) vorgesehen ist, wobei innerhalb des Kopfstützenkörpers (2) ein Verbindungsteil (22) zur Verbindung der Kopfstützenhalterung (3) mit dem Kopfstützenkörper (2) vorgesehen ist, wobei zwischen dem Verbindungsteil (22) und dem Bezug (21) ein Füllmaterial (23), insbesondere ein Schaum, angeordnet ist, wobei das Füllmaterial (23) in seinem Verarbeitungszustand im wesentlichen flüssig vorgesehen ist, wobei, bezüglich des Füllmaterials (23) in seinem Verarbeitungszustand, das Verbindungsteil (22) und der Bezug (21) einen im wesentlichen dichten Raumbereich (25) definieren und der Bezug (21) im wesentlichen an der gesamten Außenseite des Kopfstützenkörpers (2) angeordnet ist, insbesondere auch im Bereich des Austritts (31) der Kopfstützenhalterung (3) aus dem Kopfstützenkörper (2), und der Bezug (21) zumindest teilweise im Bereich eines im Bereich des Austritts (31) der Kopfstützenhalterung (3) befindlichen Randes (28) des Verbindungsteils (22) verläuft, **dadurch gekennzeichnet, dass** der Rand (28) derart vorgesehen ist, dass sich der Bezug (21) abdichtend an den Rand (28) anlegt, wobei das Verbindungsteil (22) ein Hauptteil (221) und ein auf das Hauptteil (221) klappbares Hilfsteil (222) aufweist und eine Feder (29) zur mechanischen Verbindung und der Realisierung der Kippbeweglichkeit zwischen der Kopfstützenhalterung (3) und dem Verbindungsteil (22) vorgesehen ist, wobei ein Befestigungselement (32) zur Befestigung des Verbindungsteils (22) mit der Feder (29) vorgesehen ist, wobei das Verbindungsteil (22) auf der bezüglich der Kopfstützenhalterung (3) dem Rand (28) gegenüberliegenden Seite ein Befestigungsmittel (26) für den Bezug (21) aufweist..

2. Kopfstütze (1) nach Anspruch 1, **dadurch gekennzeichnet, dass** das Verbindungsteil (22) zur Aufnahme der Kopfstützenhalterung (3) ein Innenvolumen (27) aufweist und dass bezüglich des Füllmaterials (23) in seinem Verarbeitungszustand der mit dem Füllmaterial (23) in Kontakt kommende Teil des Verbindungsteils (22) gegenüber dem Innenvolumen (27) abdichtend vorgesehen ist.

3. Verfahren zur Herstellung einer Kopfstütze (1) gemäß einem der vorhergehenden Ansprüche, wobei die Kopfstützenhalterung (3) und das Verbindungsteil (22) innerhalb des Bezugs (21) angeordnet werden und wobei anschließend das Füllmaterial (23) in seinem Verarbeitungszustand in den Raumbereich (25) zwischen dem Bezug (21) und dem Verbindungsteil (22) eingebracht wird und dort seinen Endzustand annimmt, **dadurch gekennzeichnet, dass** zumindest während das in die Kopfstütze (1) eingebrachte Füllmaterial (23) in seinem Verarbeitungszustand vorliegt, mittels eines Werkzeugs der Bezug (21) gegen den Rand (28) des Verbindungsteils (22) gedrückt wird.

4. Fahrzeugsitz mit einer Kopfstütze (1) gemäß einem der Ansprüche 1 oder 2, **dadurch gekennzeichnet, dass** die Kopfstütze (1) gegenüber dem Sitz im wesentlichen entlang einer Haupterstreckungsrichtung der Kopfstützenhalterung (3) nach oben und nach unten verstellbar vorgesehen ist.

## Claims

1. Headrest (1) for a vehicle, in particular a motor vehicle, comprising a headrest body (2) and a headrest holding element (3), a cover (21) being at least partially provided on the outer face of the headrest body (2), a connection part (22) being provided inside the headrest body (2) for connecting the headrest holding element (3) to the headrest body (2), a filling material (23), in particular a foam, being arranged between the connection part (22) and the cover (21), the filling material (23) being provided in substantially liquid form in its processing state, wherein, relative to the filling material (23) in its processing state, the connection part (22) and the cover (21) define a substantially sealed space (25) and the cover (21) is arranged substantially on the entire outer face of the headrest body (2), in particular also in the region of the outlet (31) of the headrest holding element (3) from the headrest body (2), and the cover (21) extends at least partially in the region of one edge (28) of the connection part (22) located in the region of the outlet (31) of the headrest holding element (3), **characterized in that** the edge (28) is provided such that the cover (21) sealingly bears against the edge (28), the connection part (22) having a main part (221) and an auxiliary part (222) which can be folded onto the main part (221), and a spring (29) being provided for the mechanical connection and for realizing the tiltability between the headrest holding element (3) and the connection part (22), a fastening element (32) being provided for fastening the connection part (22) to the spring (29), the connection part (22) having a fastening means (26) for the cover (21) on the side which lies opposite the edge (28) with regard to the headrest holding element (3).

2. Headrest (1) according to Claim 1, **characterized in that** the connection part (22) has an internal volume (27) for receiving the headrest holding element (3) and **in that**, relative to the filling material (23) in its processing state, the part of the connection part (22) coming into contact with the filling material (23) is sealingly provided relative to the internal volume (27).

3. Method for producing a headrest (1) according to one of the preceding claims, the headrest holding element (3) and the connection part (22) being arranged inside the cover (21) and subsequently the filling material (23) being introduced in its processing state into the space (25) between the cover (21) and the connection part (22) and adopting its final state there, **characterized in that**, at least whilst the filling material (23) introduced into the headrest (1) is in its processing state, the cover (21) is pressed by means of a tool against the edge (28) of the connection part (22).

4. Vehicle seat comprising a headrest (1) according to one of Claims 1 or 2, **characterized in that** the headrest (1) is provided to be adjustable upwards and downwards relative to the seat, substantially in a main extension direction of the headrest holding element (3).

## Revendications

1. Appui-tête (1) pour un véhicule, en particulier pour un véhicule automobile, comprenant un corps d'appui-tête (2) et un support d'appui-tête (3), une housse (21) étant prévue au moins partiellement sur le côté extérieur du corps d'appui-tête (2), une partie de liaison (22) pour la liaison du support d'appui-tête (3) au corps d'appui-tête (2) étant prévue à l'intérieur du corps d'appui-tête (2), un matériau de remplissage (23), en particulier une mousse, étant disposé entre la partie de liaison (22) et la housse (21), le matériau de remplissage (23) étant prévu de manière essentiellement liquide dans son état de traitement, la partie de liaison (22) et la housse (21) définissant, par rapport au matériau de remplissage (23) dans son état de traitement, une région spatiale (25) essentiellement étanche, et la housse (21) étant disposée essentiellement sur tout le côté extérieur du corps d'appui-tête (2), en particulier également dans la région de la sortie (31) du support d'appui-tête (3) hors du corps d'appui-tête (2), et la housse (21) s'étendant au moins partiellement dans la région d'un bord (28) de la partie de liaison (22) se trouvant dans la région de la sortie (31) du support d'appui-tête (3), **caractérisé en ce que** le bord (28) est prévu de telle sorte que la housse (21) s'applique de manière étanche contre le bord (28), la partie de liaison (22) comprenant une partie principale (221) et une partie auxiliaire (222) pouvant être rabattue sur la partie principale (221), et un ressort (29) pour la liaison mécanique et pour la réalisation de la mobilité en basculement étant prévu entre le support d'appui-tête (3) et la partie de liaison (22), un élément de fixation (32) pour la fixation de la partie de liaison (22) au ressort (29) étant prévu, la partie de liaison (22) présentant, sur le côté opposé au bord (28) par rapport au support d'appui-tête (3), un moyen de fixation (26) pour la housse (21).

2. Appui-tête (1) selon la revendication 1, **caractérisé en ce que** la partie de liaison (22) présente un volume intérieur (27) pour recevoir le support d'appui-tête (3), et **en ce que** la partie de la partie de liaison (22) venant en contact avec le matériau de remplissage (23) est prévue de manière étanche vis-à-vis du volume intérieur (27), par rapport au matériau de remplissage (23) dans son état de traitement.

3. Procédé de production d'un appui-tête (1) selon l'une quelconque des revendications précédentes, le support d'appui-tête (3) et la partie de liaison (22) étant disposés à l'intérieur de la housse (21), et le matériau de remplissage (23) dans son état de traitement étant ensuite introduit dans la région spatiale (25) entre la housse (21) et la partie de liaison (22), et y adoptant son état final, **caractérisé en ce qu'**au moins pendant que le matériau de remplissage (23) introduit dans l'appui-tête (1) est dans son état de traitement, la housse (21) est pressée contre le bord (28) de la partie de liaison (22) au moyen d'un outil.

4. Siège de véhicule comprenant un appui-tête (1) selon l'une quelconque des revendications 1 et 2, **caractérisé en ce que** l'appui-tête (1) est prévu de manière ajustable par rapport au siège vers le haut et vers le bas essentiellement le long d'une direction d'étendue principale du support d'appui-tête (3).
